(19) Europäisches Patentamt
European Patent Office
Office européen des brevets

(11) **EP 2 334 065 A2**

(12) **EUROPEAN PATENT APPLICATION**

(43) Date of publication:
**15.06.2011 Bulletin 2011/24**

(51) Int Cl.:
*H04N 7/01* (2006.01)   *H04N 5/14* (2006.01)

(21) Application number: **10193332.3**

(22) Date of filing: **01.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.12.2009 TR 200909120**

(71) Applicant: **Vestel Elektronik Sanayi ve Ticaret A.S.**
**45030 Manisa (TR)**

(72) Inventor: **Ozkalayci, Burak**
**45030, Manisa (TR)**

(74) Representative: **Cayli, Hülya**
**Paragon Consultancy Inc.**
**Koza Sokak No: 63/2**
**GOP**
**06540 Ankara (TR)**

(54) **Motion vector field retiming method**

(57)     Motion vector field retiming is the most common method for motion compensated interpolation especially in frame rate up - conversion applications. However, halo problems occur at occlusion regions on object - motion boundaries because of wrong motion estimation. Thus, a reliable re-timed motion vector field is needed to acquire a motion vector field at the temporal location of the frame to be interpolated. In present invention a novel motion vector field retiming method is described. According to said method, FG (3) - BG (4) discrimination metric is calculated for previous motion vector field ($f_n$) and next motion vector field ($f_{n+1}$). According to calculated discrimination metric, projection of previous motion vector field ($f_n$) in forward direction (101) and next motion vector field ($f_{n+1}$) in backward direction (102) is done. Said projected vectors (101, 102) compose a motion vector field which is interpolated between previous frame ($f_n$) and next frame ($f_{n+1}$). By using FG (3) - BG (4) discrimination metric with projection of motion vector fields in previous frame ($f_n$) and next frame ($f_{n+1}$), halo problems are overcome.

Figure 1-a

**Description**

**Technical Field**

This invention relates to a motion vector field retiming method for motion compensated interpolation applications on object - motion boundaries in frame rate up - conversion for video applications.

**Prior Art**

Motion estimation can be defined as determining the motion information of moving objects in following frames in a video sequence. Most common method for motion estimation is block matching method. In said block matching method, image divided into several blocks and a block is chosen as a reference block in the present frame. Then, best matching block with the reference block is sought in the next frame. Thus, displacement of reference block in the next frame can be detected. Displacement is calculated by the vectorial difference between the locations of the matched blocks of the consecutive frames.

Frame rate up-conversion (FRUC) is necessary for conversion between various display formats with different frame rates. For instance, FRUC application should be taken into account in order to watch a video which has lower frame rate, with a video display which has a higher refresh rate. Since higher frame rate requires more frames, missing frames of original video frame sequence should be estimated. To solve the explained problem, motion compensated interpolation is used. By using motion estimation method the motion vector field of missing frames are calculated and missing frames are interpolated temporally.

There are two main approaches for motion vector field estimation of the frame to be interpolated temporally. The first approach is to set the temporal reference of the motion estimation algorithm as the temporal location of the frame to be interpolated. The second approach is retiming. Retiming can be expressed as making the motion estimation on the source frames and then projecting the motion vector field(s) temporally to the temporal location of the frame to be interpolated.

In the article Motion-Compensated Frame Rate Up-Conversion Based on Block Matching Algorithm by Shinya Fujiwara and Akira Taguchi, a method for motion compensated interpolation in FRUC is explained. According to said article, motion vectors of 8x8 size blocks are estimated. Since, even in still regions, the motion vector is not equal to zero, each 8x8 region is judged whether still or move by threshold operation. Then, if the region is judged, still motion vector is forced to zero of the region. In proposed method, four 8x8 blocks merged into 16x16 and four 16x16 blocks merged into 32x32 if it is necessary. By merging blocks, block artifacts reduced since, similar motion blocks are merged into one block. Moreover, moving objects are interpolated clearly since, even if the moving object is located into multi 8x8 blocks, these blocks merged into one block. However, in this method retiming condition is not taken into account since, motion vector field estimation is not discussed.

In another document, US 2007/0092111 A1, a motion vector field retiming method is described. In said application, method comprises creating a set of motion vectors by selecting a number of motion vectors according to a sequence of video images from the first motion vector field being estimated for the first image and second motion vector field being estimated for the second image, on basis of the particular spatial position of the particular pixel and establishing the particular motion vector by performing an order statistical operation, median operation, on the set of motion vectors. These selected and established motion vectors reveal intermediate motion vector field which is interpolated to a temporal position in between first and second motion vector fields.

In WO 2007/049209 patent document, a method to interpolate or extrapolate a motion vector field from two or more motion vector fields is described. According to described method, first, a number of candidate pairs of vectors from the different motion vector fields are selected and a vector is used to fetch the vectors of pair. By selecting a number of candidate pairs of vectors motion compensated de-interlacing and film judder removal are performed. Then, choose one pair based on an error metric. At last, linear or non - linear interpolation is applied to obtain the required retiming vector. To require retiming vector, a retiming algorithm is used. Described method is applied by said retiming vector algorithm.

**Brief Description of the Invention**

Present invention explains a method for motion vector field retiming. Said method basically comprises two processes. First process is the discrimination of FG - BG vectors. During discrimination process, discrimination measures of the previous and next frames are calculated. After discrimination process, retiming process is taken into account. In retiming process, temporal projection locations of the motion vectors of the previous and next frames are calculated which is also called retiming of motion vector fields. Then, retimed motion vector fields are filled with projected motion vectors. After filling step, there may still be some un-projected (unfilled) regions due to motion estimation errors. These unfilled regions are filled with the neighbouring vectors at the same spatial location in the previous and next frames in accordance with spatially smoothness on the retimed motion vector field.

## Object of the Invention

The object of the present invention is to provide a new method for retiming motion vector field in video applications such as frame rate up - conversion (FRUC).

Another object of the present invention is to propose reliable, robust retimed motion vector field.

Another object of the present invention is to provide robust motion vector field estimation to motion compensated interpolation.

Another object of the present invention is to provide a true frame interpolation for motion compensated interpolation in video applications such as frame rate up - conversion applications.

Another object of the invention is to reduce the number of missing frames in a frame sequence during frame interpolation.

Another object of the invention is to avoid halo problems in video applications such as frame rate up - conversion applications caused by wrong motion vector estimation.

## Brief Description of the Drawings

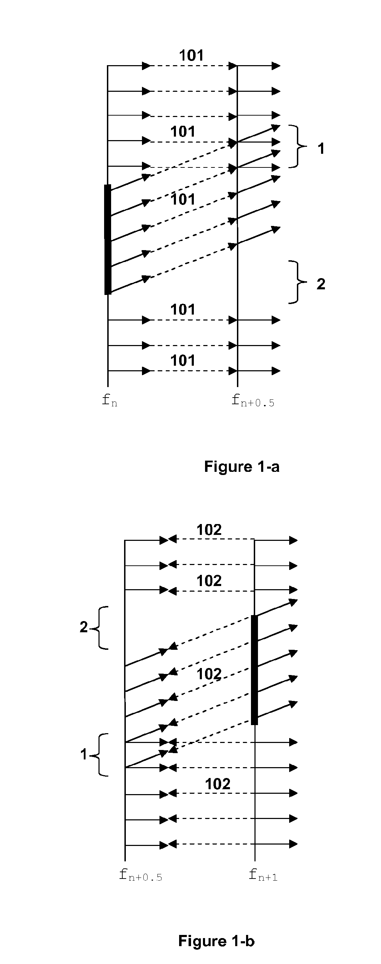

Figure 1-a: shows the projection of previous motion vector field in forward direction.
Figure 1-b: shows the projection of next motion vector field in backward direction.
Figure 2 : shows combination of the projection of previous and next motion vector fields with interpolated motion vector field.
Figure 3 : shows the application of discrimination metric for previous and next motion vector fields.

The reference numbers as used in figures may possess the following meanings.

Previous frame ($f_n$)
Next frame ($f_{n+1}$)
Interpolated frame, present frame ($f_{n+0,5}$)
Multiple projected region (1)
Un-projected region (2)
Forward projection vector of previous motion vector field (101)
Backward projection vector of next motion vector field (102)
Foreground (3)
Background (4)
Cover region vector (301)
Un-cover region vector (302)

## Detailed Description of the Invention

In frame rate up - conversion (FRUC) applications motion estimation, which is projecting the motion vector fields estimated for the original frames ($f_n$, $f_{n+1}$ ) through forward (101) and backward (102) trajectories, is done for motion compensated interpolation According to said trajectories, a temporal frame ($f_{n+0,5}$ ) can be interpolated between original frames ($f_n$, $f_{n+1}$) by the motion vector field obtained from the projected vectors (101, 102). However, halo problems occur at occlusion regions because of wrong motion estimation. Thus, a reliable re-timed motion vector field is needed to acquire a motion vector field at the temporal location of the frame to be interpolated.

As described above by interpolating the motion vector field which is obtained by projection (101, 102) of original motion vectors through their own trajectory to the desired temporal location means the retiming of original motion vector fields ($f_n$, $f_{n+1}$). In Figure 1-a, the projection of the nearest previous motion vector field ($f_n$) in forward direction (101) and in Figure 1-b, the projection of the nearest next motion vector field ($f_{n+1}$) in backward direction (102) is shown. By examining the figures, it can be seen that multiple projected (1) and un-projected (2) areas occur after projection process. As shown in figure 1-a, multiple projected areas (1) occur at cover regions and un-projected areas (2) occur at uncover regions in forward projection (101). Also as shown in figure 1-b, multiple projected areas (1) occur at uncover regions and un-projected areas (2) occur at cover regions in backward projection (102). Because of multiple projected areas (1) motion vector estimation causes wrong estimation of motion vectors and because of un-projected areas (2) missing motion vectors occur. These wrong estimation and missing motion vector cases cause halo problems at occlusion regions (cover and uncover regions).

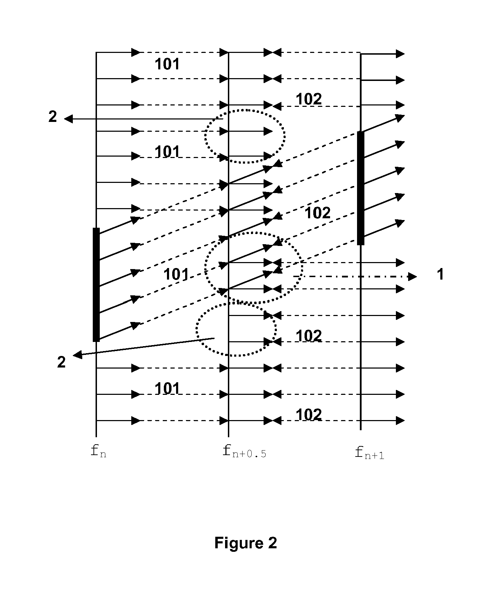

To deal with both multiple projected areas (1) and un-projected areas (2) can be more difficult and more complex. Thus, as shown in figure 2, the combination of projection of next ($f_{n+1}$) and previous ($f_n$) frames in backward (102) and forward (101) directions should be taken into account, respectively. In figure 2, interpolated frame ($f_{n+0,5}$) represent the present frame and according to present frame ($f_{n+0,5}$), $f_n$ is the previous frame and $f_{n+1}$ is the next frame. By combination of these three frames un-projected regions (2) due to forward projection (101) of previous frame ($f_n$) is compensated by projection of next frame ($f_{n+1}$) in backward direction (102) and un-projected regions (2) due to backward projection (102) of next frame ($f_{n+1}$) is compensated by projection of previous frame ($f_n$) in forward direction (101). Hence, un-projected regions (2) are compensated and the only task, multiple projected regions (1), should be discussed.

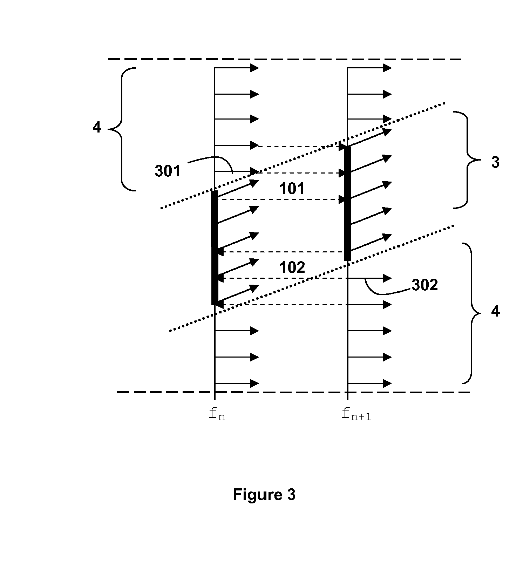

In multiple projected regions (1), foreground (FG) and background (BG) vectors are in combination. Thus, FG (3) - BG (4) discrimination should be done to avoid wrong motion vector estimation. Before retiming process, FG (3) - BG (4) discrimination measures are calculated for previous ($f_n$) and next ($f_{n+1}$) motion vector fields. During retiming process described above, discrimination metric values are also taken into account for each motion vectors projected in forward (101) and backward (102) directions, for previous ($f_n$) and next ($f_{n+1}$) motion vector fields, respectively. By comparing discrimination measures with multiple projected vectors, appropriate foreground (3) vectors are determined. The application of discrimination metric for previous ($f_n$) and next ($f_{n+1}$) frame is shown in figure 3. Moreover, as explained above, since multiple projected regions occur at cover region of previous frame ($f_n$) and at uncover region for next ($f_{n+1}$) frame, discrimination is done for cover region vectors (301) for previous frame ($f_n$) and uncover region vectors (302) for next frame ($f_{n+1}$).

Above explained motion vector field re-timing method is applied in NxN block - sized grid. In NxN block - sized grid, every block is visited by means of a window or kernel which is called scanning. Said window or kernel size can be 3x3 block size, for instance. Figure 3 illustrates discrimination process in a 3x3 window or kernel size.

After discrimination and retiming processes there may be also some un-projected (un-filled) regions which are caused by motion estimation errors. These regions can be filled with the neighboring vectors or the vectors at the same spatial location in the next ($f_{n+1}$) and previous ($f_n$) frames. The smoothness of the motion vector fields around un-filled regions should also be considered to avoid halo problems.

The algorithms of above described method are discussed below step by step.

As described above, first of all discrimination of FG (3) and BG (4) should be done for forward direction (101) to previous frame ($f_n$) and backward direction (102) to next frame ($f_{n+1}$). To start discrimination process discrimination buffer should be set to zero for all vector blocks comprising previous ($f_n$) and next ($f_{n+1}$) frames.

$$D_{buf,prv} = 0$$

$$D_{buf,nxt} = 0$$

After setting buffers to zero, all blocks are visited by any scan order and below described steps should be applied to all visited blocks to complete the discrimination process.

The forward trajectory crossing block location, $x_f$, on the motion vector field of the previous frame ($f_n$) should be computed.

$x_f = (x \cdot N + v_t(x))/N$ where $v_t(x)$ is the motion vector of the block spatially at x on the previous frame ($f_n$) and N is the block size in pixel unit.

The backward trajectory crossing block location, $x_b$, on the motion vector field of the next frame ($f_{n+1}$) should be computed.

$x_b = (x \cdot N - v_{t+1}(x))/N$ where $v_{t+1}(x)$ is the motion vector of the block spatially at x on the next frame and N is the block size in pixel unit.

Each block is visited by means of said window or kernel. Each block positioned at x is centered in said window or kernel and accumulation process is taken into account.

Forward trajectory motion vector difference of the motion vector field of the previous frame ($f_n$) is accumulated to the accumulation buffer, $D_{buf,prv}$.

$D_{buf,prv}(x + n) = D_{buf,prv}(x + n) + \|v_t(x+n) - v_{t+1}(x_f+n)\|$ where n is an offset vector to visit each block in said window or kernel.

Backward trajectory motion vector difference of the motion vector field of the next frame ($f_{n+1}$) is accumulated to the accumulation buffer, $D_{buf,nxt}$.

$D_{buf, nxt}(x + n) = D_{buf, nxt}(x + n) + \| v_{t+1}(x + n) - vt(x_b + n) \|$ where n is an offset vector to visit each block in said window or kernel.

As an example for 3x3 window or kernel the set of vectors, n must be {(-1, -1), (-1, 0), (0, 0), (0,1), (1, -1), (1, 0), (1, 1)}.

After discrimination process, retiming process is taken into account. To start retiming, a variable, cost buffer ($C_{buf}$), for FG (3) and BG (4) is defined and $C_{buf}$ is set to -1 as default for each block. This set value marks each block as un-filled in the beginning of the process.

$$C_{buf} = -1$$

After setting cost buffer to -1, all blocks are visited by any scan order and below described steps should be applied to all visited blocks to complete the retiming process.

The temporal projection location of the motion vectors of the blocks on the previous frame ($f_n$), $X_{fp}$, should be calculated.

$x_{fp} = (x \cdot N + v_t(x) \cdot (\alpha) / N$ where $\alpha$ is the temporal offset of the retiming instance.

The temporal projection location of the motion vectors of the blocks on the next frame ($f_{n+1}$), $X_{bp}$, should be calculated.

$x_{bp} = (x \cdot N - v_{t+1}(x) \cdot (1 - \alpha)) / N$ where $\alpha$ is the temporal offset of the retiming instance.

The temporal offset variable "$\alpha$" can take values between 0 and 1. The values can be determined according to applications.

These calculated projection locations also represent unfilled retimed motion vector fields, $V_{t+\alpha}$.

After calculation of projection locations for previous ($f_n$) and next ($f_{n+1}$) frames, said retimed motion vector fields $v_{t+\alpha}'$ are filled with temporally projected motion vectors (101, 102). During filling process, $C_{buf}$ value of the visited block is checked and compared with FG (3)

- BG (4) metric measure of the projected vector. If the block on the retimed motion vector field is unfilled, which means $C_{buf}$ = -1 or FG (3) - BG (4) metric measure of the projected vector is lower than the $C_{buf}$ of previously filled one, said motion vector field is filled with temporally projected motion vectors (101, 102) of the previous ($f_n$) and next ($f_{n+1}$) frames. Said check is represented below:

If

$$C_{buf}(x_{fp}) = -1 \text{ or } D_{buf,prv}(x) < C_{buf}(x_{fp})$$

Then

$$C_{buf}(x_{fp}) = D_{buf,prv}(x) \text{ and } v_{t+\alpha}(x_{fp}) = v_t(x) \text{ for forward projection (101)}$$

If

$$C_{buf}(x_{bp}) = -1 \text{ or } D_{buf,nxt}(x) < C_{buf}(x_{bp})$$

Then

$$C_{buf}(x_{bp}) = D_{buf,nxt}(x) \text{ and } v_{t+\alpha}(x_{bp}) = v_{t+1}(x) \text{ for backward projection (102)}.$$

After filling the retimed motion vector fields with projected motion vectors (101, 102), retiming process is completed. However, as described above, there may still be un-projected (unfilled) regions on retimed motion vector fields because of motion estimation errors. To accomplish said problem, unfilled blocks on the retimed motion vector field ($C_{buf}$ = -1) are filled with one of the motion vectors at the same spatial location on the motion vector fields of the previous ($f_n$) and next ($f_{n+1}$) frames, $v_t$ (x) or $v_{t+1}$ (x). Motion vectors are chosen according to smoothness, spatially smoother one on the retimed motion vector field is the proper vector for filling.

**Claims**

1. A motion vector field retiming method for motion compensated interpolation applications on object - motion boundaries in frame rate up - conversion for video applications **characterized in that** it further contains the steps of;

   - calculation of FG (3) - BG (4) discrimination metric for previous ($f_n$) and next ($f_{n+1}$) motion vector fields for each visited block,
   - calculation of temporal projection location of the motion vectors between previous frame ($f_n$) and next frame ($f_{n+1}$) for each visited block,
   - filling said calculated temporal projection location with projection of previous motion vector field ($f_n$) in forward direction (101) and next motion vector field ($f_{n+1}$) in backward direction (102) by considering said calculated discrimination metric,
   - filling un-projected regions after retiming process by one of the motion vectors at the same spatial location on the motion vector fields of the previous frame ($f_n$) or next frame ($f_{n+1}$), $v_t$(x) or $V_{t+1}$(X).

2. A method according to claim 1 wherein, calculation of said discrimination metric is done for forward projection (101) of previous frame ($f_n$) and for backward projection (102) of next frame ($f_{n+1}$).

3. A method according to claim 1 wherein, calculation of said discrimination metric is made for cover region vectors (301) of previous frame ($f_n$) and for uncover region vectors (302) of next frame ($f_{n+1}$).

4. A method according to claim 1 wherein, a variable, $C_{buf}$, is defined to check whether each visited block comprising retimed motion vector fields is filled or un-filled.

5. A method according to claim 3 wherein, said variable, $C_{buf}$, is set to -1 as default for each block.

6. A method according to claim 1 wherein, the temporal projection location of the motion vectors of the blocks on the previous frame ($f_n$), $X_{fp}$, and on the next frame ($f_{n+1}$), $X_{bp}$, can be calculated as;

$$x_{fp} = (x \cdot N + v_t(x) \cdot \alpha) / N$$

and

$$x_{bp} = (x \cdot N - v_{t+1}(x) \cdot (1-\alpha)) / N$$

7. A method according to claim 6 wherein, the temporal offset variable $\alpha$, can take value between 0 and 1.

8. A method according to claim 1 wherein, filling said calculated temporal projection location is done by comparing $C_{buf}$ value of visited block with said discrimination metric of said visited block.

9. A method according to claim 8 wherein, comparison can be done as;

If

$C_{buf}(x_{fp})$ = -1 or $D_{buf,prv}(x)$ < $C_{buf}(x_{fp})$

Then

$C_{buf}(x_{fp})$ = $D_{buf,prv}(x)$ and $v_{t+\alpha}(x_{fp}) = v_t(x)$ for forward projection (101)


If

$C_{buf}(x_{bp})$ = -1 or $D_{buf,nxt}(x)$ < $C_{buf}(x_{bp})$

Then

$C_{buf}(x_{bp})$ = $D_{buf,nxt}(x)$ and $v_{t+\alpha}(x_{bp}) = v_{t+1}(x)$ for backward projection (102).

**101**

**101**

**101**

**101**

**101**

1

2

$f_n$

$f_{n+0.5}$

**Figure 1-a**

**102**

**102**

**102**

**102**

2

1

$f_{n+0.5}$

$f_{n+1}$

**Figure 1-b**

**Figure 2**

**Figure 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070092111 A1

- WO 2007049209 A